# EUROPEAN PATENT SPECIFICATION

(11) **EP 1 693 937 B1**
(45) Date of publication and mention of the grant of the patent: **05.12.2012**
(21) Application number: 06100115.2
(22) Date of filing: 05.01.2006
(51) Int. Cl.: H02B 1/052

(54) **System for fixing an apparatus-mounting rail to the frame of an electrical control panel**
System zur Befestigung eine Profilschiene an einem Rahmenelement eines elektrischen Gehäuses
Système de fixation d'un rail de montage à un châssis d'un bôitier électrique

(30) Priority: 22.02.2005 IT RM20050078
(43) Date of publication of application: 23.08.2006
(73) Proprietor: BTICINO S.P.A., 20154 Milano (IT)
(72) Inventor: Fabrizi, Fabrizio, I-20154, MILANO (IT)
(74) Representative: Carangelo, Pierluigi

(56) References cited:
- EP-A- 0 673 094
- EP-A- 1 416 600
- DE-C1- 4 200 836

## Description

The present invention relates to the sector of electrical control panels and, in particular, to a system for fixing an apparatus-mounting rail to the frame of an electrical control panel.

A typical electrical control panel is composed of a frame and of walls and doors fixed to the frame. The frame is composed of a rectangular base, of four metal uprights fixed with their lower ends to the base and of a covering element fixed to the upper ends of the uprights. A particular embodiment of a structure of an electrical control panel of the type described above, is represented in figure 1 of the European Patent Application EP 1054492 A1.

The metal section of the uprights usually has a series of holes of different shapes and sizes along all its sides for fixing, generally by means of bolts, the base, the covering element, the panels, the door hinges and any other bars and accessories of various types. A particular embodiment of the metal section of the type described above is represented in figure 1 of the European Patent EP 0538540 B1.

Document EP 0 673 094 discloses a device according to the preamble of claim 1.

In order to mount electrical apparatus inside the electrical control panel, rails are used which are fixed between two uprights of the frame, usually near the back wall of the electrical panel. The shapes and sizes of the rails are standard so that electrical apparatus, also with standard shapes and sizes, can be fixed to them.

Wiring of electrical control panels is an operation which requires precision and attention and it is often hindered by the large number of electrical cables which must be added to connect the apparatuses contained inside the panel to each other and to the input and output terminals of the panel.

One object of the present invention is to provide an electrical control panel where the wiring operation is easier than that for known electrical panels.

Another object of the invention is to provide a system for fixing an apparatus-mounting rail to the frame of an electrical control panel which permits easy mounting and dismounting of the rail itself.

Said objects are reached by means of the fixing system described in claim 1 in its most general form and in the dependent claims in some particular embodiments.

Further features and advantages of the present invention will become more apparent from the following detailed description of an exemplary but non-limiting embodiment thereof, as illustrated in the accompanying drawings, in which:
- figure 1 is a part of a frame of an electrical control panel with a rail fixed with the fixing system according to the invention,
- figure 2 is a perspective view of one end of the rail,
- figure 3 is a perspective view of a plate of the fixing system according to the invention fixed to the end of a rail,
- figure 4 is a perspective view of a segment of a frame upright and an angle bar which forms part of the fixing system according to the invention and
- figure 5 is a perspective view of a fixing system according to the invention during mounting.

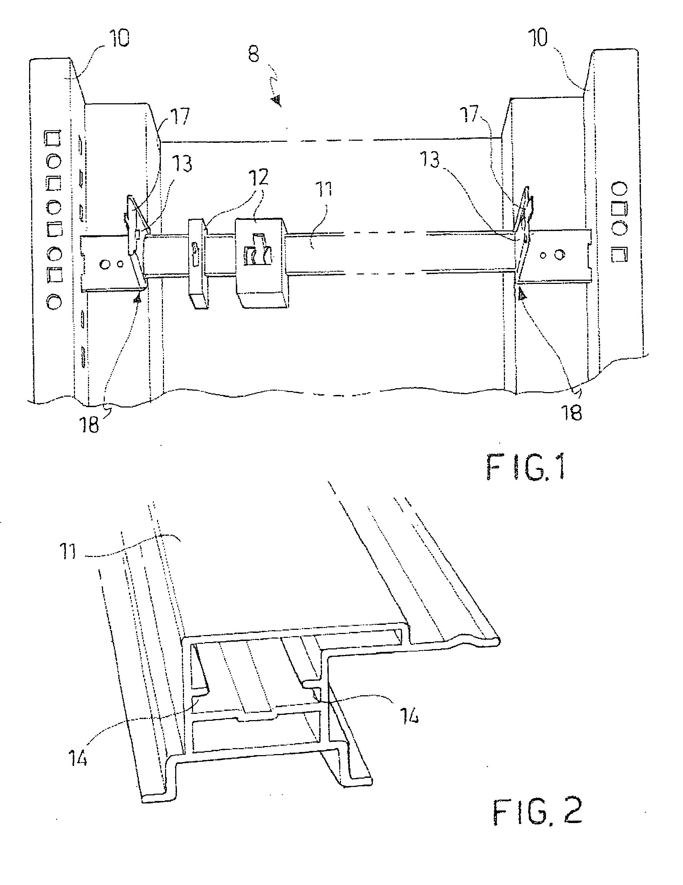

Figure 1 shows two uprights 10 of the frame of an electrical control panel 8, not further illustrated, and a rail 11 to support electrical apparatus 12. The rail 11 is fixed at its ends to the uprights by means of a fixing system according to the invention. In this embodiment, electrical apparatus of different dimensions can be mounted on the rail, in particular of different depths, as will be better explained hereafter.

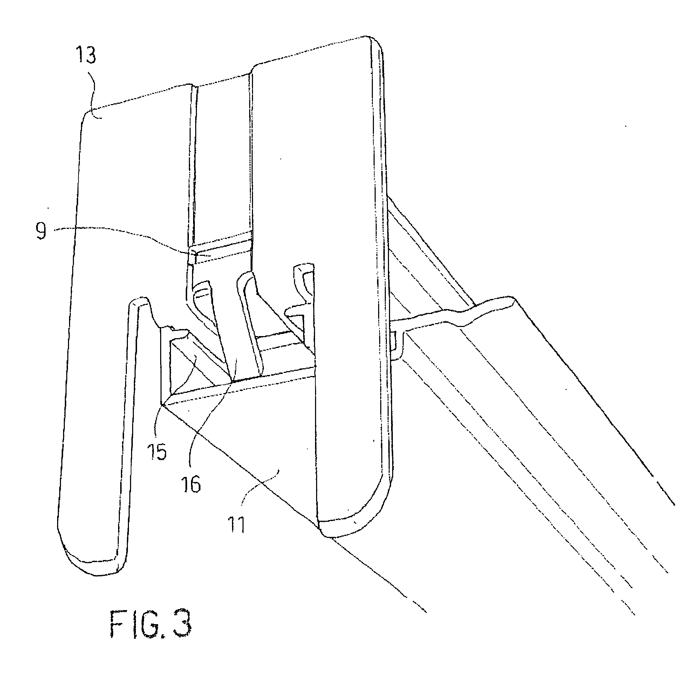

The fixing system comprises two plate-like elements 13 fixed to the ends of the rail 11 and substantially at right angles to it. In this embodiment, as can be seen in figure 2, the rail 11 is made of a segment of a hollow section iron with ribbing on the two opposite internal walls which form two guides 14. Each of the plate-like elements 13, as can be seen in particular in figure 3, is substantially U-shaped, and therefore will be called U-plate hereinafter, and is made from a piece of cut and bent sheet steel. The piece of sheet steel has a part 15 at right angles to the U-plate and a tab 16 inclined by 30-45° to the surface of the plate itself. A slit 9 extends along the U-plate transversally to the tab 16. The part 15, inserted between the guides 14 of the rail 11, is used to fix the plate 13 to the end of the rail.

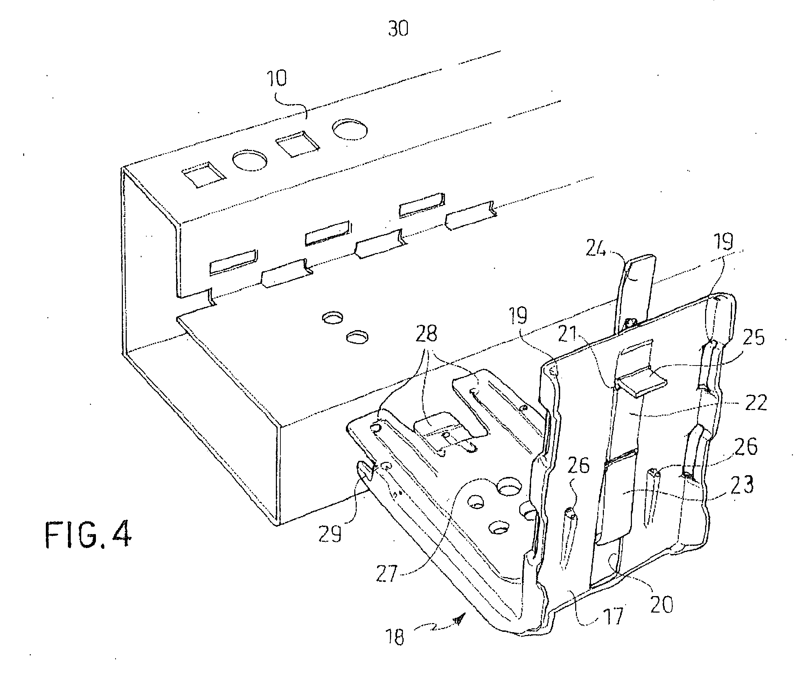

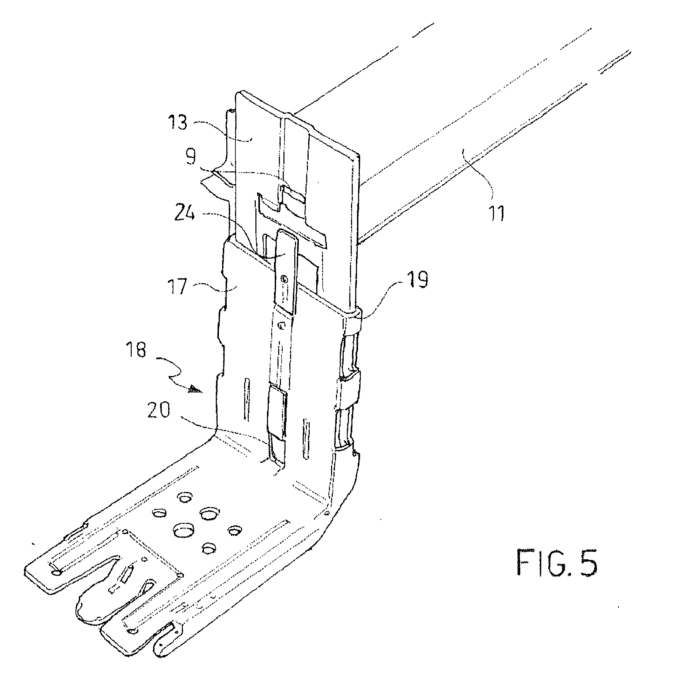

The fixing system comprises other two plate-like elements 17 intended to be fixed to the two uprights 10 of the frame in such a position and direction that they each juxtapose with a corresponding U-plate 13. In this embodiment, as illustrated in particular in figure 4, each of the two plate-like elements 17 forms part of an angle bar in sheet steel, indicated generally with 18, and has edges which are bent and shaped so as to form two guides 19. The U-plate 13 can be inserted between the guides 19 and be made to slide on the part 17 of the angle bar 18, juxtaposing with it, until it stops in a predetermined fixing position, defined by a stopping device. More particularly, as can be seen in figures 4 and 5, the stopping device comprises a tooth 25, suitable to engage with the slit 9 of the U-plate 13. The tooth 25 forms an integral part with an elastic tongue 22 in steel which passes through a slit 20 and is bent so as to form an elastic clip 23 which clasps the part 17 and projects with one end 24 from the free edge of the part 17. The tooth 25, in this embodiment formed integrally with the tongue 22, passes through another slit 21 and projects from the part 17 on the side with the guides 19. On this side, there are two protuberances 26 placed at equal distances from the free edge of the part 17. The other part of the angle bar 18 preferably has through holes 27 and is shaped at its free end with tabs 28, staggered between each other, and teeth 29 arranged in such a way as to be inserted into corresponding slits in an upright 10 (figure 4).

In order to mount the rail 11, two angle bars 18 like that described above, are fixed to two uprights 10 of the frame at the same height, inserting the tabs 28 and the teeth 29 in the corresponding slits in the uprights.

Two U-plates are then fixed to the two ends of the rail 11 and inserted into the guides 19 of the respective already mounted angle bars 18. When the U-plates 13 slide along the guides 19, the teeth 25 projecting from the parts 17 engage with the inclined walls formed by the tabs 16 and are moved in contrast to the action of the respective elastic tongues 22. The sliding action stops as soon as the teeth 25 reach their respective seats, i.e. the slits 9, and are inserted into them. In this position, the rail 11 is fixed with respect to the uprights 10 of the frame. In order to free the rail, it is sufficient to manually disengage the ends 24 of the tongues from the teeth 25. In this way, the rail can be separated from the frame by moving it away from the back wall, or moving it towards the back wall by sliding the U-plates 13 further into their respective guides 19 of the angle bars 18 until the internal edges of the bars of the U-plate 13 come into contact with the protuberances 26. In this position the teeth 25 snap beyond the free edges of the respective U-plates due to the elasticity of the respective tongues 22 and as a result of which the rail 11 remains fixed in a second position. In order to free the rail, it is again sufficient to manually disengage the teeth 25 from the ends 24 of the tongues.

The choice of either one or the other fixing position is determined by the size of the electrical apparatus mounted or to be mounted on the rail, in particular by its depth.

As can easily be deduced from the above description, the objects of the invention are fully achieved. In fact, an electrical control panel which uses a fixing system according to the invention can be wired very easily thanks to the fact that the rails supporting the electrical apparatus can be easily mounted and dismounted. If necessary, the cables can be connected to the electrical apparatus mounted on the rail even before mounting the rail in its definitive position.

Furthermore, the possibility of choosing between two fixing positions for the rail considerably increases the versatility of the installation.

Naturally, although only one embodiment of the invention has been illustrated and described, numerous modifications and variations are possible within the scope of the invention. For example, only one fixing position for the two plate-like elements can be provided, or more than two by simply making more slits in the U-plate to hold the tooth of the tongue.

## Claims

1. System for fixing an apparatus-mounting rail (11) to the frame (8) of an electrical control panel, **characterized in that** it comprises:
- a first pair of plate-like elements (13) fixed to the rail (11), spaced between each other and substantially at right angles to the rail,
- a second pair of plate-like elements (17), suitable to be fixed to the frame in positions and directions such that they are each juxtaposed to a corresponding plate-like element (13) of the first pair,
- means for connecting each plate-like element (13) of the first pair to a corresponding plate-like element (17) of the second pair, comprising guide means (19) such as to allow each plate-like element to slide on the corresponding plate-like element in one direction only and
- stopping means (25, 9, 26) such as to limit said sliding action in at least one position for fixing the two plate-like elements to each other;
**characterized in that**
the stopping means comprise a tooth (25) integral with an elastic tongue (22) fixed to one (17) of the juxtapositional plate-like elements and projecting from one surface of said plate-like element.

2. Fixing system according to claim 1, wherein the stopping means further comprise protruding means (26) on said surface at a predetermined distance from the tooth, the other (13) juxtapositional plate-like elements being shaped so as to abut against the tooth (25) and against the protruding means (26) in order to determine a position for fixing the two plate-like elements to each other.

3. System according to claim 1, wherein the stopping means further comprise a seat (9) of the other (13) of the plate-like elements suitable to receive the tooth (25) in order to determine a position for fixing the two plate-like elements to each other.

4. System according to claim 1, wherein the stopping means further comprise a seat (9) in the other (13) of the plate-like elements suitable to receive the tooth (25) in order to determine a position for fixing the two plate-like elements to each other and protruding means (26) on said surface at a predetermined distance from the tooth, the other (13) of the juxtapositional elements being shaped so as to abut against the tooth (25) and against the protruding means (26) in order to determine a second position for fixing the two plate-like elements to each other.

5. System according to claim 2, 3 or 4, wherein the other (13) of the plate-like elements comprises an inclined surface (16) arranged so as to abut against the tooth (25) while the two plate-like elements slide on each other.

6. System according to claim 2, 3, 4 or 5, wherein the elastic tongue is provided with a manual gripping element (24).

7. System according to claim 6, wherein the manual gripping element (24) is one end of the tongue (22).

8. System according to any of the preceding claims, wherein the plate-like elements (13) of the first pair are each fixed to one end of the rail (11).

9. An electrical control panel comprising a system for fixing an apparatus-mounting rail (11) to a frame (8) of said electrical panel according to any of the preceding claims.

## Patentansprüche

1. System zum Befestigen einer Vorrichtungsanbringungsschiene (11) an dem Rahmen (8) eines elektrischen Steuerbedienfelds, **dadurch gekennzeichnet, dass** dasselbe folgende Merkmale aufweist:
- ein erstes Paar von plattenartigen Elementen (13), die an der Schiene (11) befestigt sind, beabstandet voneinander und im Wesentlichen in rechten Winkeln zu der Schiene,
- ein zweites Paar von plattenartigen Elementen (17), die geeignet sind, um an dem Rahmen in Positionen und Richtungen befestigt zu werden, so dass dieselben jeweils benachbart zu einem entsprechenden plattenartigen Element (13) des ersten Paars angeordnet sind,
- eine Einrichtung zum Verbinden jedes plattenartigen Elements (13) des ersten Paars mit einem entsprechenden plattenartigen Element (17) des zweiten Paars, die eine Führungseinrichtung (19) aufweist, um es jedem plattenartigen Element zu ermöglichen, auf dem entsprechenden plattenartigen Element in nur einer Richtung zu gleiten, und
- eine Anschlageinrichtung (25, 9, 26), um die Gleitaktion in zumindest einer Position zu begrenzen, zum Befestigen der zwei plattenartigen Elemente aneinander;
**dadurch gekennzeichnet, dass**
die Anschlageinrichtung einen Zahn (25) integriert mit einer elastischen Zunge (22) aufweist, der an einem (17) der benachbarten plattenartigen Elemente befestigt ist und von einer Oberfläche des plattenartigen Elements vorsteht.

2. Befestigungssystem gemäß Anspruch 1, bei dem die Anschlageinrichtung ferner eine Vorsprungseinrichtung (26) auf der Oberfläche an einem vorbestimmten Abstand von dem Zahn aufweist, wobei das andere (13) benachbarte plattenartige Element geformt ist, um gegen den Zahn (25) und gegen die Vorsprungseinrichtung (26) anzustoßen, um eine Position zum Befestigen der zwei plattenartigen Elemente aneinander zu bestimmen.

3. System gemäß Anspruch 1, bei dem die Anschlageinrichtung ferner einen Sitz (9) des anderen (13) der plattenartigen Elemente aufweist, der geeignet ist, um den Zahn (25) aufzunehmen, um eine Position zum Befestigen der zwei plattenartigen Elemente aneinander zu bestimmen.

4. System gemäß Anspruch 1, bei dem die Anschlageinrichtung ferner einen Sitz (9) in dem anderen (13) der plattenartigen Elemente aufweist, der geeignet ist, um den Zahn (25) aufzunehmen, um eine Position zum Befestigen der zwei plattenartigen Elemente aneinander und einer Vorsprungseinrichtung (26) auf der Oberfläche an einem vorbestimmten Abstand von dem Zahn zu bestimmen, wobei das andere (13) der benachbarten Elemente geformt ist, um gegen den Zahn (25) und gegen die Vorsprungseinrichtung (26) anzustoßen, um eine zweite Position zum Befestigen der zwei plattenartigen Elemente aneinander zu bestimmen.

5. System gemäß Anspruch 2, 3 oder 4, bei dem das andere (13) der plattenartigen Elemente eine geneigte Oberfläche (16) aufweist, die angeordnet ist, um gegen den Zahn (25) zu stoßen, während die zwei plattenartigen Elemente aufeinander gleiten.

6. System gemäß Anspruch 2, 3, 4 oder 5, bei dem die elastische Zunge mit einem manuellen Greifelement (24) versehen ist.

7. System gemäß Anspruch 6, bei dem das manuelle Greifelement (24) ein Ende der Zunge (22) ist.

8. System gemäß einem der vorhergehenden Ansprüche, bei dem die plattenartigen Elemente (13) des ersten Paars jeweils an einem Ende der Schiene (11) befestigt sind.

9. Ein elektrisches Steuerbedienfeld, das ein System zum Befestigen einer Vorrichtungsanbringungsschiene (11) an einem Rahmen (8) des elektrischen Bedienfelds gemäß einem der vorhergehenden Ansprüche aufweist.

## Revendications

1. Système de fixation d'un rail (11) de montage d'appareil au châssis (8) d'un panneau de commande électrique, **caractérisé en ce qu'**il comprend :
une première paire d'éléments en forme de plaque (13) fixés au rail (11), espacés l'un de l'autre et essentiellement à angles droits par rapport au rail,
une deuxième paire d'éléments en forme de plaque (17), adaptés pour être fixés au châssis dans certaines positions et directions de sorte que chaque élément soit juxtaposé à un élément en forme de plaque correspondant (13) de la première paire,
un moyen destiné à relier chaque élément en forme de plaque (13) de la première paire à un élément en forme de plaque correspondant (17) de la deuxième paire, comprenant un moyen de guidage (19) pour permettre à chaque élément en forme de plaque de coulisser sur l'élément en forme de plaque correspondant dans une seule direction, et
un moyen d'arrêt (25, 9, 26) permettant de limiter ladite action de coulissement dans au moins une position afin de fixer les deux éléments en forme de plaque l'un à l'autre ;
**caractérisé en ce que**
le moyen d'arrêt comprend une dent (25) solidaire d'une languette élastique (22) fixée à un élément (17) des éléments en forme de plaque juxtaposés et se projetant d'une surface dudit élément en forme de plaque.

2. Système de fixation selon la revendication 1, dans lequel le moyen d'arrêt comprend en outre un moyen faisant saillie (26) sur ladite surface à une distance prédéterminée à partir de la dent, l'autre élément (13) des éléments en forme de plaque juxtaposés étant mis en forme de manière à venir en butée contre la dent (25) et contre le moyen faisant saillie (26) afin de déterminer une position de fixation des deux éléments en forme de plaque l'un à l'autre.

3. Système selon la revendication 1, dans lequel le moyen d'arrêt comprend en outre un siège (9) de l'autre élément (13) des éléments en forme de plaque adapté pour recevoir la dent (25) afin de déterminer une position de fixation des deux éléments en forme de plaque l'un à l'autre.

4. Système selon la revendication 1, dans lequel le moyen d'arrêt comprend en outre un siège (9) dans l'autre élément (13) des éléments en forme de plaque adapté pour recevoir la dent (25) afin de déterminer une position de fixation des deux éléments en forme de plaque l'un à l'autre et un moyen faisant saillie (26) sur ladite surface à une distance prédéterminée à partir de la dent, l'autre élément (13) des éléments juxtaposés étant mis en forme de manière à venir en butée contre la dent (25) et contre le moyen faisant saillie (26) afin de déterminer une deuxième position de fixation des deux éléments en forme de plaque l'un à l'autre.

5. Système selon la revendication 2, 3 ou 4, dans lequel l'autre élément (13) des éléments en forme de plaque comprend une surface inclinée (16) agencée de manière à venir en butée contre la dent (25) tandis que les deux éléments en forme de plaque coulissent l'un sur l'autre.

6. Système selon la revendication 2, 3, 4 ou 5, dans lequel la languette élastique est pourvue d'un élément de préhension manuelle (24).

7. Système selon la revendication 6, dans lequel l'élément de préhension manuelle (24) est une extrémité de la languette (22).

8. Système selon l'une des revendications précédentes, dans lequel chacun des éléments en forme de plaque (13) de la première paire est fixé à une extrémité du rail (11).

9. Panneau de commande électrique comprenant un système pour fixer un rail (11) de montage d'appareil à un châssis (8) dudit panneau électrique selon l'une des revendications précédentes.
